# EUROPEAN PATENT APPLICATION

(11) **EP 4 790 274 A1**
(43) Date of publication of application: **12.08.2026**
(21) Application number: 24874318.9
(22) Date of filing: 28.06.2024
(51) Int. Cl.: F16F 15/02, F16F 15/08

(54) **ANTI-VIBRATION DEVICE**

(30) Priority: 04.10.2023 JP 2023173193
(71) Applicant: Prospira Corporation, Kanagawa prefecture 212-0013 (JP)
(72) Inventor: UEKI, Akira, Kawasaki city, Kanagawa 212-0013 (JP)
(74) Representative: V.O.
(86) International application number: PCT/JP2024/023599
(87) International publication number: WO 2025/074701

(57) **Abstract**

To provide an anti-vibration device that can sufficiently lower a resonance magnification while a weight is reduced and an increase in a dynamic magnification is suppressed. An anti-vibration device (1) includes a first mounting member (T1), a second mounting member (T2), and a mass member (F) coupled to the first mounting member and the second mounting member via an elastic body section (B) and forming an annular shape. The elastic body section includes a first elastic member (B1) coupled at one end portion to the mass member and extending on or near a first input/output axis (Q1), and a second elastic member (B2) coupled at one end portion to the mass member and extending on or near a second input/output axis (Q2). An end portion on the mass member side of the first elastic member and an end portion on the mass member side of the second elastic member are positioned at the positions different from each other. A center of gravity (FG) of the mass member is offset in a second input/output axial direction (Q2D) with respect to an input/output point (J) that is an intersection of the first input/output axis and the second input/output axis. The second elastic member is configured of an elastic material having a higher damping force than the first elastic member.

## Description

### Technical Field

This invention relates to an anti-vibration device.

### Background Art

There has typically been known that in an anti-vibration device including a spring element (elastic body) and a mass element (mass body), a resonance phenomenon occurs at a particular vibration frequency (resonance frequency), so that the absolute spring constant is suddenly increased to deteriorate the vibration absorption performance. For resonance suppression, a high damping rubber and the like are also considered to be used as the elastic body, but the high damping rubber typically has a high dynamic magnification (an absolute spring constant/a static spring constant), and for example, when the anti-vibration device is used in a vehicle, there can be the deterioration of the riding comfort and the like.

Accordingly, there has also been known that a dynamic damper including the spring member and the mass member is further provided in the anti-vibration device, thereby lowering the resonance magnification in the above resonance phenomenon. For example, Patent Literature 1 discloses that the dynamic damper is provided in a rod main body of a torque rod.

### Citation List

### Patent Literature

Patent Literature 1: WO02/42662A1

### Summary of Invention

### Technical Problem

However, in order that by the dynamic damper, the resonance magnification is sufficiently lowered (resonance suppression) while the increase in the dynamic magnification is suppressed, a mass of the mass member of the dynamic damper is required to be significantly increased, so that it is found that this can lead to the increase in a weight of the entire device.

Accordingly, an object of the present invention is to provide an anti-vibration device that can sufficiently lower a resonance magnification while a weight is reduced and an increase in a dynamic magnification is suppressed.

### Solution to Problem

[1] An anti-vibration device includes: a first mounting member configured to be mounted in one of sides of a vibration generation section and a vibration reception section; a second mounting member configured to be mounted in the other side of the vibration generation section and the vibration reception section and isolated from the first mounting member; an elastic body section; and a mass member coupled to the first mounting member and the second mounting member via the elastic body section and forming a shape of all or part of an annular shape. The elastic body section includes: one or a plurality of first elastic members coupled at one end portion to the mass member and extending on or near a predetermined first input/output axis, when seen in a mass member axial direction; and one or a plurality of second elastic members coupled at one end portion to the mass member and extending on or near a predetermined second input/output axis, when seen in the mass member axial direction. An end portion on the mass member side of the first elastic member and an end portion on the mass member side of the second elastic member are positioned at a positions different from each other in a mass member circumferential direction. A center of gravity of the mass member is offset in a second input/output axial direction parallel to the second input/output axis with respect to an input/output point that is an intersection of the first input/output axis and the second input/output axis, when seen in the mass member axial direction. The second elastic member is configured of an elastic material having a higher damping force than the first elastic member.
   With this, the resonance magnification can be sufficiently lowered while the weight is reduced and the increase in the dynamic magnification is suppressed.
[2] In the anti-vibration device according to [1], a first input/output axial direction parallel to the first input/output axis, when seen in the mass member axial direction, is the direction of a main vibration inputted to the anti-vibration device.
   With this, the resonance suppression and the lowered dynamic magnification can be both coped with more reliably.
[3] The anti-vibration device according to [1] or [2], includes: one mass member; the two first mounting members disposed on both sides in the mass member axial direction; and the second mounting member disposed between the two first mounting members in the mass member axial direction and isolated from the two first mounting members.
   With this, the vibration balance becomes good.
[4] In the anti-vibration device according to [3], each of the two first mounting members is coupled to the mass member via one of the first elastic members and one of the second elastic members, and the second mounting member is coupled to the mass member via only one of the first elastic members.
   With this, the vibration in the second input/output axial direction can be less likely to be transmitted to the vibration reception section.
[5] In the anti-vibration device according to [3], each of the two first mounting members and the second mounting member is coupled to the mass member via one of the first elastic members and one of the second elastic members.
   With this, the resonance suppression effect can be made larger.
[6] In the anti-vibration device according to any one of [1] to [5], the first input/output axis and the second input/output axis are orthogonal, when seen in the mass member axial direction.
   With this, for example, when the anti-vibration device is mounted in the vehicle such that the first input/output axial direction is the front-rear direction of the vehicle and the second input/output axial direction is the up-down direction of the vehicle, the effect of the anti-vibration device for the vehicle can be exhibited more appropriately.
[7] In the anti-vibration device according to [1] or [2], the first mounting member is coupled to the mass member via one of the first elastic members and one of the second elastic members, and the second mounting member is coupled to the mass member via only one of the first elastic members.
   With this, the vibration in the second input/output axial direction can be less likely to be transmitted to the vibration reception section.
[8] In the anti-vibration device according to [1] or [2], each of the first mounting member and the second mounting member is coupled to the mass member via one of the first elastic members and one of the second elastic members.
   With this, the resonance suppression effect can be made larger.
[9] In the anti-vibration device according to [7] or [8], an end portion on the first mounting member side of the first elastic member coupled to the first mounting member and an end portion on the first mounting member side of the second elastic member coupled to the first mounting member are positioned at substantially the same position in the mass member axial direction.
   With this, the resonance suppression and the lowered dynamic magnification can be both coped with more effectively.
[10] In the anti-vibration device according to [8], the end portion on the second mounting member side of the first elastic member coupled to the second mounting member and the end portion on the second mounting member side of the second elastic member coupled to the second mounting member are positioned at substantially the same position in the mass member axial direction.
   With this, the resonance suppression and the lowered dynamic magnification can be both coped with more effectively.
[11] In the anti-vibration device according to any one of [1] to [10], when a vibration is inputted to the anti-vibration device in the first input/output axial direction parallel to the first input/output axis when seen in the mass member axial direction, the center of gravity of the mass member rotates on an elliptic trajectory, when seen in the mass member axial direction.

### Advantageous Effects of Invention

According to the present invention, an anti-vibration device can be provided, that can sufficiently lower a resonance magnification while a weight is reduced and an increase in a dynamic magnification is suppressed.

### Brief Description of Drawings

Fig. 1 is a side view schematically illustrating a state where an anti-vibration device according to a first embodiment of the present invention is seen from one side in a mass member axial direction (seen in the mass member axial direction).
Fig. 2 is a perspective view schematically illustrating a state where the anti-vibration device of Fig. 1 is diagonally seen.
Fig. 3 is a plan view schematically illustrating a state where the anti-vibration device of Fig. 1 is seen from a second input/output axial direction first side toward a second input/output axial direction second side.
Fig. 4 is a perspective view schematically illustrating a state where an anti-vibration device according to a second embodiment of the present invention is diagonally seen.
Fig. 5 is a plan view schematically illustrating a state where the anti-vibration device of Fig. 4 is seen from a second input/output axial direction first side toward a second input/output axial direction second side.
Fig. 6 is a side view schematically illustrating a state where the anti-vibration device according to a third embodiment of the present invention is seen from one side in a mass member axial direction (seen in the mass member axial direction).
Fig. 7 is a perspective view schematically illustrating a state where the anti-vibration device of Fig. 6 is diagonally seen.
Fig. 8 is an explanatory view for explaining an overview of an operation principle of the anti-vibration device according to the respective embodiments of the present invention.
Fig. 9 is an explanatory view for supplementally explaining an elliptic trajectory of Fig. 8.
Figs. 10(a) and 10(b) are each an explanatory view for explaining the detail of the operation principle of the anti-vibration device according to the respective embodiments of the present invention.
Figs. 11(a) and 11(b) are each an explanatory view for explaining the detail of the operation principle of the anti-vibration device according to the respective embodiments of the present invention.
Fig. 12 is a graph illustrating an analysis result of the anti-vibration device according to an embodiment.
Fig. 13 is a graph illustrating an analysis result of the anti-vibration device according to a comparative example. Description of Embodiments

An anti-vibration device of the present invention can be used as various anti-vibration devices, but is preferably used as an anti-vibration device for a vehicle, and in particular, is particularly preferably used as, for example, a torque rod and a motor mount and the like for an electric vehicle, in which a vibration input direction is basically determined as one direction.

Hereinbelow, embodiments of the anti-vibration device according to this invention will be exemplified and described with reference to the drawings.

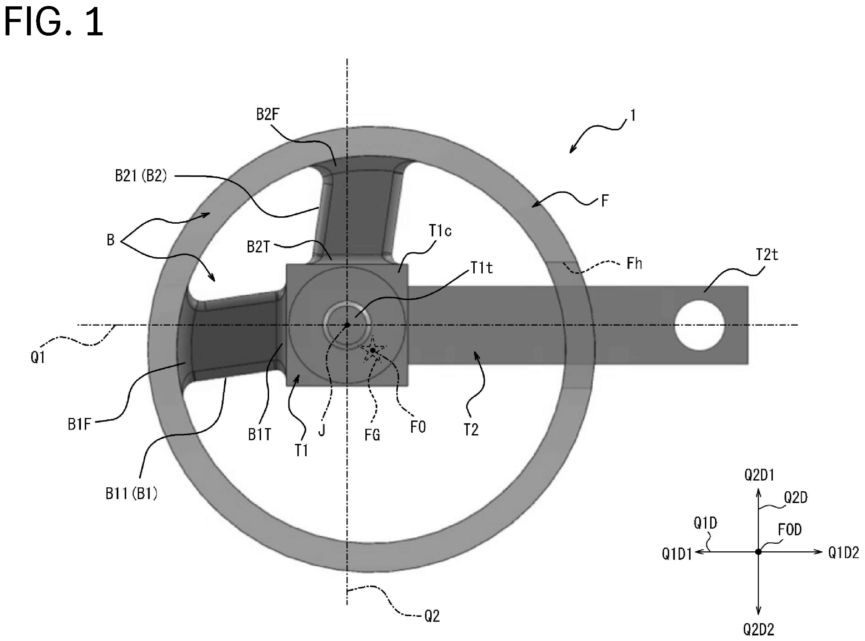

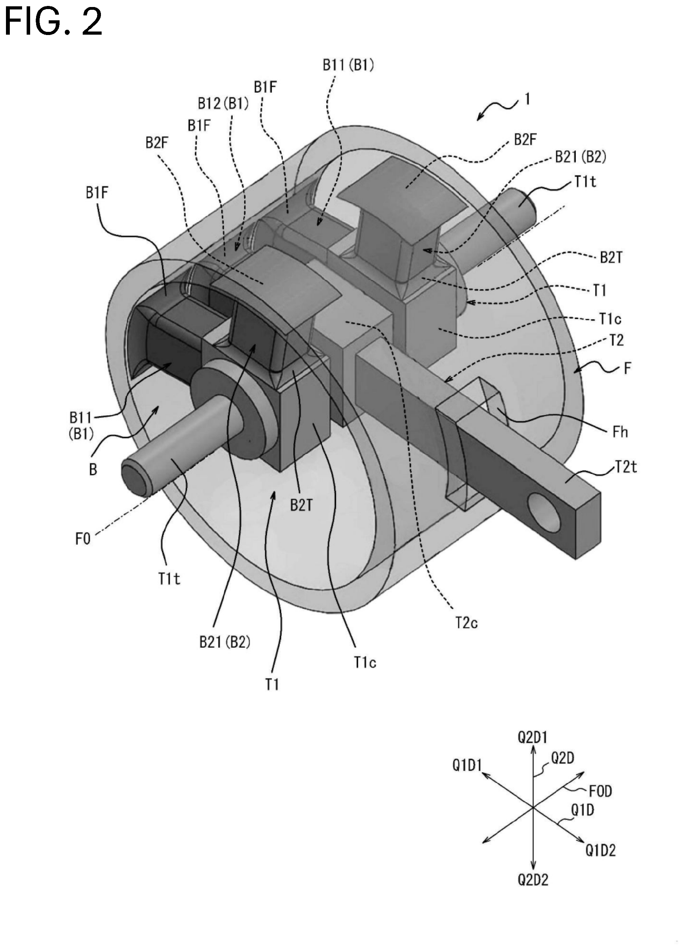

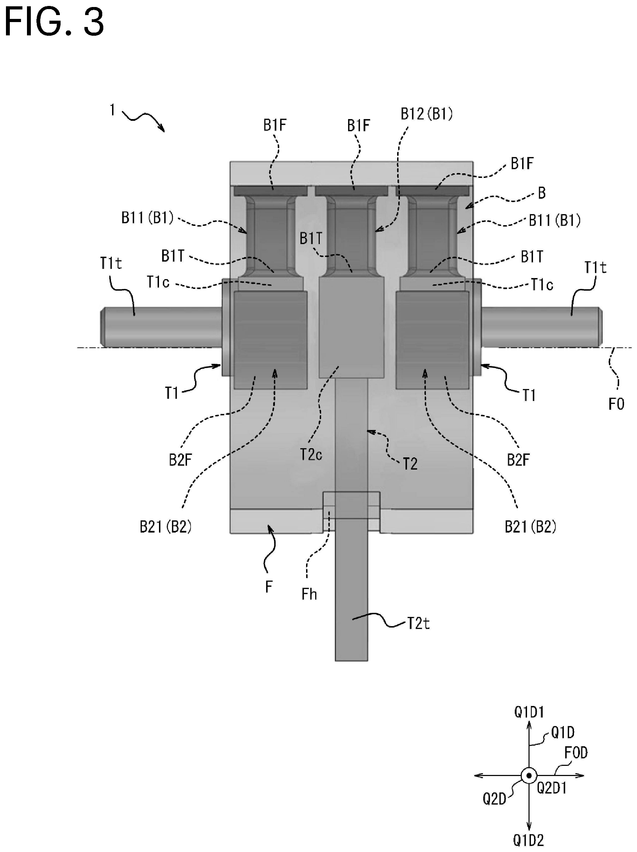

Figs. 1 to 3 are each a drawing schematically illustrating an anti-vibration device 1 according to a first embodiment of the present invention. Fig. 1 is a side view schematically illustrating a state where the anti-vibration device 1 according to the first embodiment of the present invention is seen from one side in a mass member axial direction FOD (seen in the mass member axial direction). Fig. 2 is a perspective view schematically illustrating a state where the anti-vibration device 1 of Fig. 1 is diagonally seen. Fig. 3 is a plan view schematically illustrating a state where the anti-vibration device of Fig. 1 is seen from a second input/output axial direction first side Q2D1 toward a second input/output axial direction second side Q2D2.

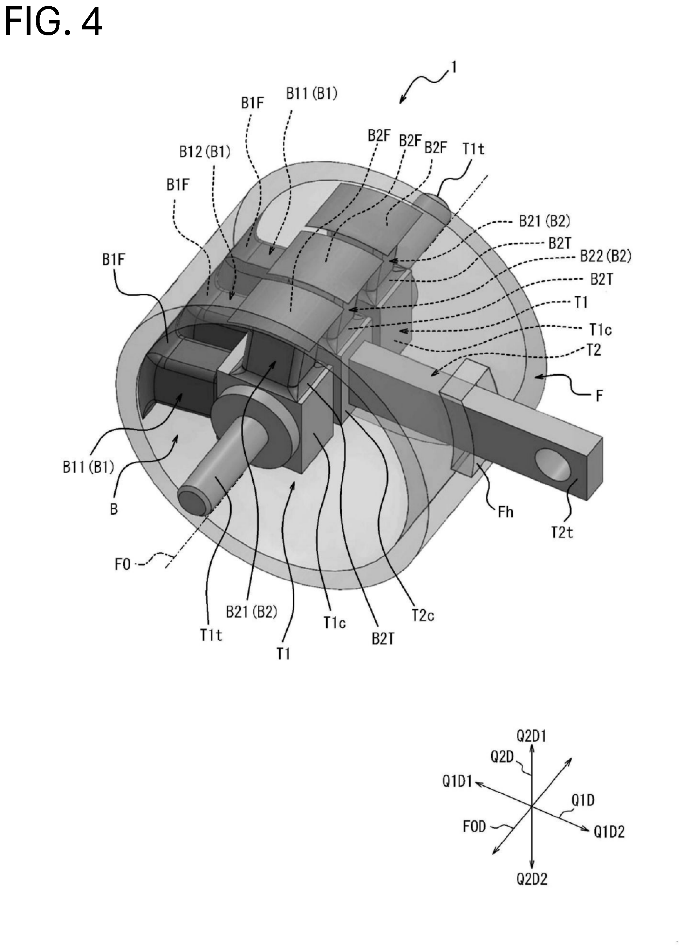

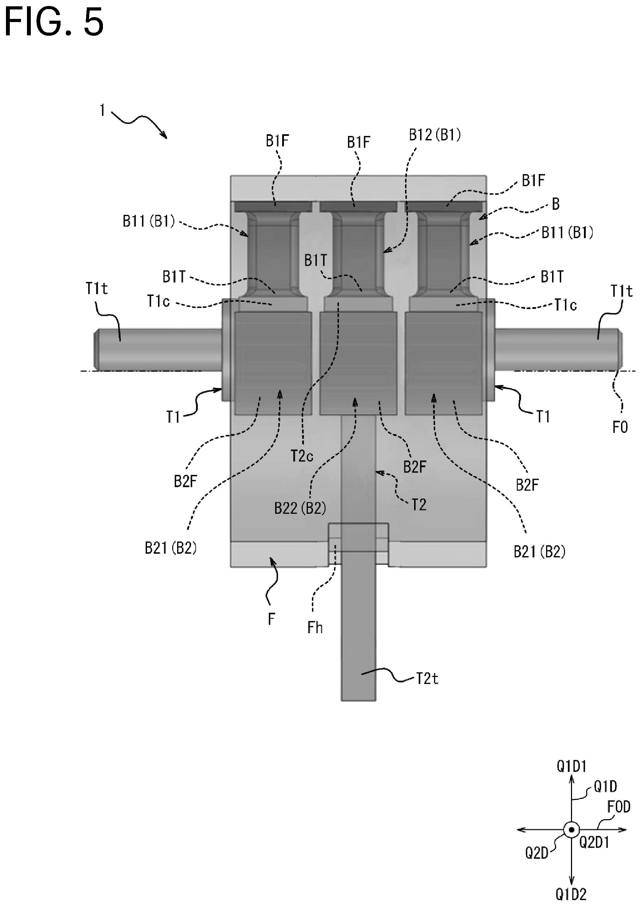

Figs. 4 and 5 are each a drawing schematically illustrating the anti-vibration device 1 according to a second embodiment of the present invention. Fig. 4 is a perspective view schematically illustrating a state where the anti-vibration device 1 according to the second embodiment of the present invention is diagonally seen. Fig. 5 is a plan view schematically illustrating a state where the anti-vibration device of Fig. 4 is seen from the second input/output axial direction first side Q2D1 toward the second input/output axial direction second side Q2D2. The state when the anti-vibration device 1 according to the second embodiment is seen in the mass member axial direction is the same as Fig. 1.

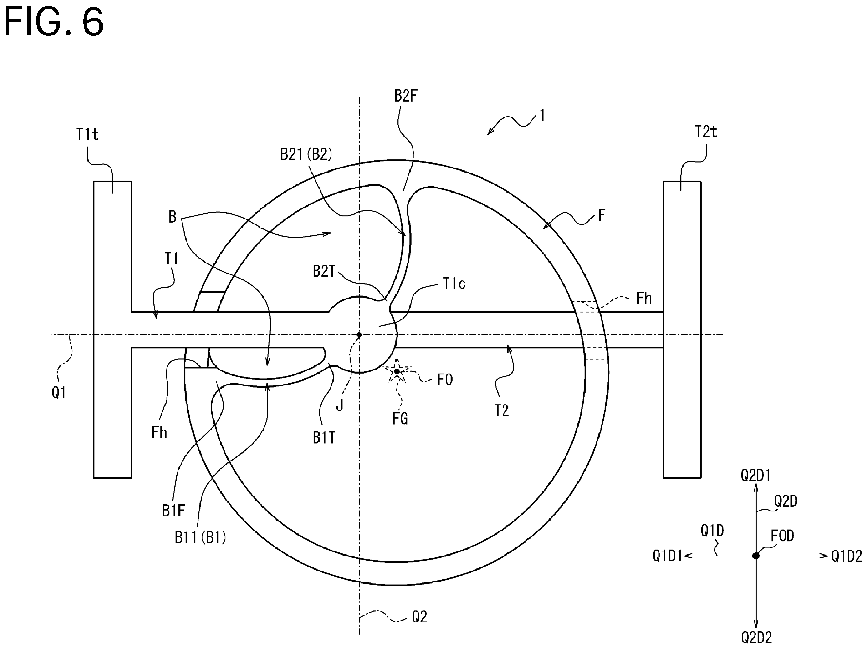

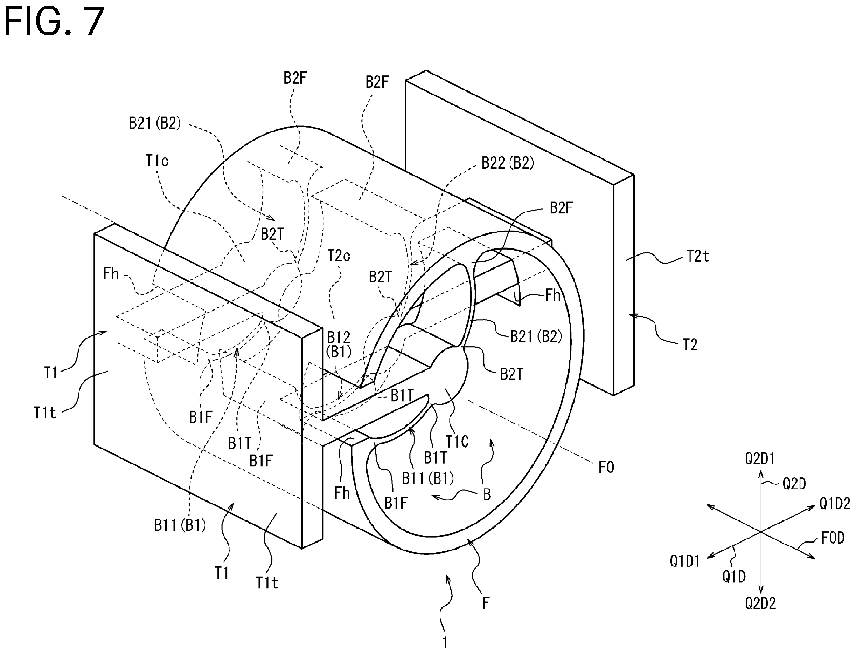

Figs. 6 and 7 are each a drawing schematically illustrating the anti-vibration device 1 according to a third embodiment of the present invention. Fig. 6 is a side view schematically illustrating a state where the anti-vibration device 1 according to the third embodiment of the present invention is seen from one side in a mass member axial direction FOD (seen in the mass member axial direction). Fig. 7 is a perspective view schematically illustrating a state where the anti-vibration device 1 of Fig. 6 is diagonally seen.

Hereinbelow, for the sake of description convenience, these respective embodiments will be described in parallel.

Unless otherwise specified, the matters described below are matters that are respectively applicable to the respective examples (the respective embodiments and the modification examples thereof) described in the present specification.

In the present specification, in describing the configuration of the anti-vibration device 1, for convenience, unless otherwise specified, as illustrated in the respective drawings of Figs. 1 to 7, a configuration in which no input is added to the anti-vibration device 1, and the anti-vibration device 1 is in the stationary and normal state (natural state) will be described.

As illustrated in Figs. 1 to 7, in the respective embodiments of the present invention, the anti-vibration device 1 includes a plurality of mounting members T1 and T2, an elastic body section B, and one mass member F.

The anti-vibration device 1 includes, as the respective mounting members T1 and T2, one or a plurality of first mounting members T1, and one or a plurality of second mounting members T2. Each of the mounting members T1 and T2 is preferably configured of a rigid body.

The first mounting member T1 is configured to be mounted by fastening and the like in one side of a vibration generation section and a vibration reception section. The second mounting member T2 is configured to be mounted by fastening and the like in the other side of the vibration generation section and the vibration reception section. In the present embodiments, in the anti-vibration device 1, the first mounting member T1 is mounted in the vibration generation section, and the second mounting member T2 is mounted in the vibration reception section. The vibration generation section is configured to input a vibration to the anti-vibration device 1, and is, for example, the engine of the vehicle. The vibration reception section is configured to receive the vibration outputted from the anti-vibration device 1, and is, for example, the vehicle body of the vehicle.

The first mounting member T1 and the second mounting member T2 are configured separately from each other, and in addition, are isolated (spaced) from each other.

In the respective embodiments illustrated in Figs. 1 to 7, the anti-vibration device 1 includes two first mounting members T1, and one second mounting member T2.

When the anti-vibration device 1 includes a plurality of first mounting members T1, unless otherwise specified, the respective first mounting members T1 have the same configuration, and the matter describing the first mounting member T1 in the present specification is applicable to the respective first mounting members T1. When the anti-vibration device 1 includes a plurality of second mounting members T2, unless otherwise specified, the respective second mounting members T2 have the same configuration, and the matter describing the second mounting member T2 in the present specification is applicable to the respective second mounting members T2.

The first mounting member T1 has a coupling section T1c coupled to the elastic body section B, and a mounting section T1t configured to be mounted by fastening and the like in one side of the vibration generation section and the vibration reception section. The second mounting member T2 has a coupling section T2c coupled to the elastic body section B, and a mounting section T2t configured to be mounted by fastening and the like in the other side of the vibration generation section and the vibration reception section.

When the anti-vibration device 1 includes the plurality of first mounting members T1, like the respective embodiments of Figs. 1 to 5, the first mounting members T1 may be configured separately from each other, or like the embodiment of Figs. 6 and 7, may be configured integrally with each other by for example, coupling the respective mounting sections T1t to each other.

When the anti-vibration device 1 includes the plurality of second mounting members T2, although not illustrated, the second mounting members T2 may be configured separately from each other, or may be configured integrally with each other by for example, coupling the respective mounting sections T2t to each other.

The mass member F is coupled to the first mounting member T1 and the second mounting member T2 via the elastic body section B. The mass member F is preferably configured of a rigid body.

The mass member F forms the shape of all or part of an annular shape. In the respective embodiments of Figs. 1 to 7, the mass member F forms the annular shape (that is, the shape of all of the annular shape). However, the mass member F may form the shape of part of the annular shape (for example, part in the circumferential direction). In addition, the annular shape in which the mass member F forms all or part of the annular shape is a circular annular shape in the respective embodiments of Figs. 1 to 7, but may be any annular shape other than the circular annular shape.

In the present specification, for the sake of description convenience, a center axis of the annular shape in which the mass member F forms all or part of the annular shape is referred to as a "mass member axis (FO)", a direction parallel to the mass member axis (FO) is referred to as a "mass member axial direction (FOD)", a side far from the center of the mass member F in the mass member axial direction (FOD) is referred to as a "mass member axial direction outer side", a side close to the center of the mass member F in the mass member axial direction (FOD) is referred to as a "mass member axial direction inner side", a direction perpendicular to the mass member axis (FO) is referred to as a "direction perpendicular to the mass member axis", a side close to the mass member axis (FO) in the direction perpendicular to the mass member axis is referred to as a "mass member inner circumference side", a side far from the mass member axis (FO) in the direction perpendicular to the mass member axis is referred to as a "mass member outer circumference side", a circumferential direction about the mass member axis (FO) is referred to as a "mass member circumferential direction", and a radial direction about the mass member axis (FO) is referred to as a "mass member radial direction".

In addition, in the anti-vibration device 1, a predetermined first input/output axis Q1 and a predetermined second input/output axis Q2 when the anti-vibration device 1 is seen from one of the sides in the mass member axial direction FOD (when seen in the mass member axial direction) are defined (Figs. 1 and 6). Each of the first input/output axis Q1 and the second input/output axis Q2 is defined when seen in the mass member axial direction, and is fixed to the anti-vibration device 1. The first input/output axis Q1 and the second input/output axis Q2 do not coincide with each other. Each of the first input/output axis Q1 and the second input/output axis Q2 is parallel to the direction perpendicular to the mass member axis.

The first input/output axis Q1 and the second input/output axis Q2 intersect with each other when seen in the mass member axial direction. In the respective embodiments of Figs. 1 to 7, the first input/output axis Q1 and the second input/output axis Q2 are orthogonal to each other when seen in the mass member axial direction.

In the present specification, for convenience, as indicated by arrows in the respective drawings, a direction parallel to the first input/output axis (Q1) is referred to as a "first input/output axial direction (Q1D)", one side in the first input/output axial direction (Q1D) is referred to as a "first input/output axial direction first side (Q1D1)", and the other side in the first input/output axial direction (Q1D) is referred to as a "first input/output axial direction second side (Q1D2)". In addition, a direction parallel to the second input/output axis (Q2) is referred to as a "second input/output axial direction (Q2D)", one side in the second input/output axial direction (Q2D) is referred to as a "second input/output axial direction first side (Q2D1)", and the other side in the second input/output axial direction (Q2D) is referred to as a "second input/output axial direction second side (Q2D2)".

For example, during use, the anti-vibration device 1 can be oriented such that the mass member axial direction FOD is the left-right direction of the vehicle, the first input/output axial direction Q1D is the front-rear direction of the vehicle, and the second input/output axial direction Q2D is the up-down direction of the vehicle. However, the anti-vibration device 1 may be oriented in any direction during use.

The elastic body section B includes one or a plurality of first elastic members B1, and one or a plurality of second elastic members B2. In the respective embodiments of Figs. 1 to 7, the respective first elastic members B1 and the respective second elastic members B2 are configured separately from each other.

In the embodiment illustrated in Figs. 1 to 3, the elastic body section B has three first elastic members B1, and two second elastic members B2. In the respective embodiments illustrated in Figs. 4 to 7, the elastic body section B has three first elastic members B1, and three second elastic members B2.

When the elastic body section B has a plurality of first elastic members B1, unless otherwise specified, the respective first elastic members B1 have the same configuration, and the matter describing the first elastic member B1 in the present specification is applicable to the respective first elastic members B1. When the elastic body section B has a plurality of second elastic members B2, unless otherwise specified, the respective second elastic members B2 have the same configuration, and the matter describing the second elastic member B2 in the present specification is applicable to the respective second elastic members B2.

The first elastic member B1 extends on or near the first input/output axis Q1 when seen in the mass member axial direction. Further, the first elastic member B1 substantially extends in the first input/output axial direction Q1D when seen in the mass member axial direction. In the respective embodiments illustrated in Figs. 1 to 5, the first elastic member B1 extends on the first input/output axis Q1 when seen in the mass member axial direction (Fig. 1). In the embodiment illustrated in Figs. 6 and 7, the first elastic member B1 extends near the first input/output axis Q1 when seen in the mass member axial direction (Fig. 6).

The second elastic member B2 extends on or near the second input/output axis Q2 when seen in the mass member axial direction. Further, the second elastic member B2 substantially extends in the second input/output axial direction Q2D when seen in the mass member axial direction. In the respective embodiments illustrated in Figs. 1 to 5, the second elastic member B2 extends on the second input/output axis Q2 when seen in the mass member axial direction (Fig. 1). In the embodiment illustrated in Figs. 6 and 7, the second elastic member B2 extends near the second input/output axis Q2, seen in the mass member axial direction (Fig. 6).

Here, the first elastic member B1 "extends near the first input/output axis Q1", seen in the mass member axial direction, which is referred to as that when the first elastic member B1 does not extend on the first input/output axis Q1" when seen in the mass member axial direction, at least part of the first elastic member B1 passes on the first input/output axis Q1 or through the position isolated from the first input/output axis Q1 in the range that does not exceed 1/2 of the length of the first elastic member B1 (the length of the line segment connecting the center in the mass member circumferential direction of an end portion B1F on the mass member side of the first elastic member B1 and the center of an end portion B1T on the mounting member side of the first elastic member B1), and that the angle on the acute angle side formed with respect to the first input/output axis Q1, of the straight line connecting the center in the mass member circumferential direction of the end portion B1F on the mass member side of the first elastic member B1 and the center of the end portion B1T on the mounting member side of the first elastic member B1 is less than 45° (preferably, 30° or less, more preferably, 10° or less).

The meaning in which the second elastic member B2 "extends near the second input/output axis Q2" when seen in the mass member axial direction is the same as above.

It should be noted that in other words, the above point is that for the anti-vibration device 1 according to the respective embodiments of the present invention, the above condition and the first input/output axis Q1 and the second input/output axis Q2 satisfying the above condition can be present and defined, and can be fixed to the anti-vibration device 1.

The first elastic member B1 is coupled at one end portion B1F thereof to the mass member F. The other end portion B1T of the first elastic member B1 is coupled to the coupling section T1c or T2c of the first mounting member T1 or the second mounting member T2.

The second elastic member B2 is coupled at one end portion B2F thereof to the mass member F. The other end portion B2T of the second elastic member B2 is coupled to the coupling section T1c or T2c of the first mounting member T1 or the second mounting member T2.

In the respective embodiments of Figs. 1 to 7, the first elastic member B1 and the second elastic member B2 (further, the elastic body section B) are respectively positioned on the mass member inner circumference side of the mass member F. In addition, in the respective embodiments of Figs. 1 to 7, the coupling sections T1c and T2c of the first mounting member T1 and the second mounting member T2 are respectively positioned on the mass member inner circumference side of the mass member F.

In the respective embodiments of Figs. 1 to 7, in the first elastic member B1, the end portion B1F on the mass member F side is positioned on the first input/output axial direction first side Q1D1 with respect to the end portion B1T on the mounting member T1 or T2 side. The end portion B1T on the mounting member T1 or T2 side of the first elastic member B1 is coupled to the portion on the first input/output axial direction first side Q1D1 of the coupling section T1c or T2c of the first mounting member T1 or the second mounting member T2. In addition, in the second elastic member B2, the end portion B2F on the mass member F side is positioned on the second input/output axial direction first side Q2D1 with respect to the end portion B2T on the mounting member T1 or T2 side. The end portion B2T on the mounting member T1 or T2 side of the second elastic member B2 is coupled to the portion on the second input/output axial direction first side Q2D1 of the coupling section T1c or T2c of the first mounting member T1 or the second mounting member T2.

The end portion B1F on the mass member F side of the first elastic member B1 and the end portion B2F on the mass member F side of the second elastic member B2 are positioned at the positions different from each other in the mass member circumferential direction.

In the respective embodiments of Figs. 1 to 7, the end portion B1F on the mass member F side of the first elastic member B1 is positioned on (Fig. 1) or near (Fig. 6) of the first input/output axis Q1 when seen in the mass member axial direction, and in addition, the end portion B2F on the mass member F side of the second elastic member B2 is positioned on (Fig. 1) or near (Fig. 6) of the second input/output axis Q2 when seen in the mass member axial direction. In addition, the end portion B1F on the mass member F side of the first elastic member B1 is coupled to the portion on the first input/output axial direction first side Q1D1 on the surface on the mass member inner circumference side of the mass member F when seen in the mass member axial direction, and in addition, the end portion B2F on the mass member F side of the second elastic member B2 is coupled to the portion on the second input/output axial direction first side Q2D1 on the surface on the mass member inner circumference side of the mass member F when seen in the mass member axial direction.

The center of gravity FG (in Figs. 1, 6, or the like, indicated by a star mark) of the mass member F is offset in the second input/output axial direction Q2D with respect to an input/output point J when seen in the mass member axial direction (Figs. 1 and 6). In the respective embodiments of Figs. 1 to 7, the center of gravity FG of the mass member F is offset to the second input/output axial direction second side Q2D2 with respect to the input/output point J when seen in the mass member axial direction.

The input/output point J is the intersection of the first input/output axis Q1 and the second input/output axis when seen in the mass member axial direction. In the respective embodiments of Figs. 1 to 7, the input/output point J is positioned on the mass member inner circumference side of the mass member F when seen in the mass member axial direction.

In the respective embodiments of Figs. 1 to 7, the respective coupling sections T1c and T2c of the first mounting member T1 and the second mounting member T2 are arrayed to be spaced from each other along the mass member axial direction FOD. The input/output point J is positioned on the respective coupling sections T1c and T2c of the first mounting member T1 and the second mounting member T2 when seen in the mass member axial direction. More specifically, in the respective embodiments of Figs. 1 to 7, the input/output point J is positioned on the center point of each of the coupling sections T1c and T2c of the first mounting member T1 and the second mounting member T2 when seen in the mass member axial direction.

The elastic body section B (further, the first elastic member B1, and the second elastic member B2) may be configured of any elastic material, and may be configured of, for example, a rubber, a resin, or the like.

The second elastic member B2 is configured of the elastic material having a higher damping force than the first elastic member B1. Here, the "damping force" of the elastic body section B can be evaluated by, for example, tanδ (loss tangent).

The first elastic member B1 that has the relatively low damping force and substantially extends in the first input/output axial direction Q1D can be said to mainly have a function supporting the mounting members T1 and T2 in the first input/output axial direction Q1D. On the other hand, the second elastic member B2 that has the relatively high damping force and substantially extends in the second input/output axial direction Q2D can be said to mainly have a function converting the vibration in the second input/output axial direction Q2D to a thermal energy to absorb the vibration.

As described above, in the anti-vibration device 1 according to the respective embodiments, the end portion B1F on the mass member F side of the first elastic member B1 and the end portion B2F on the mass member F side of the second elastic member B2 are positioned at the positions different from each other in the mass member circumferential direction, the center of gravity FG of the mass member F is offset in the second input/output axial direction Q2D with respect to the input/output point J when seen in the mass member axial direction, and the second elastic member B2 is configured of the elastic material having the higher damping force than the first elastic member B1.

Typically, in the elastic material, as the damping force (for example, the tanδ) is higher, the dynamic magnification tends to be higher, and further, from the viewpoint of the riding comfort and the like, the elastic material tends to be unpreferable for use in the anti-vibration device. In that regard, in the respective embodiments, the second elastic member B2 is configured of the elastic material having the higher damping force than the first elastic member B1, so that as compared with the case if both of the first elastic member B1 and the second elastic member B2 are configured of the elastic material having the high damping force, the damping force and further, the dynamic magnification of the entire elastic body section B can be suppressed to be low.

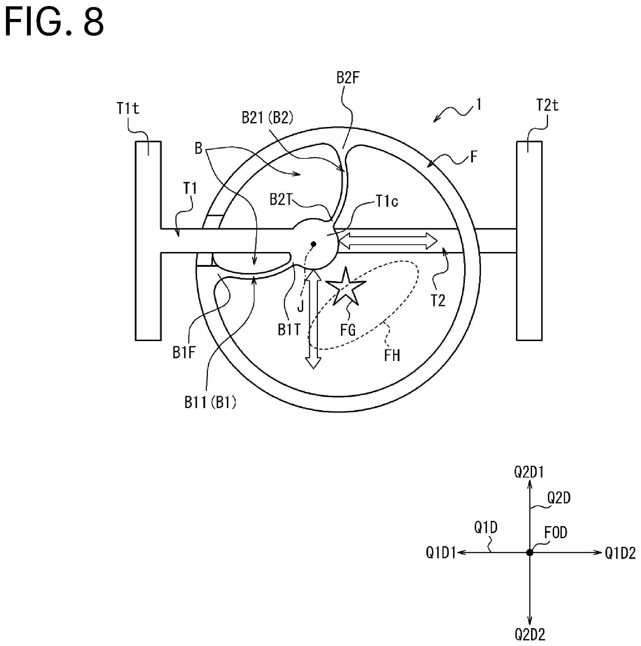

In addition, in the respective embodiments, the end portion B1F on the mass member F side of the first elastic member B1 and the end portion B2F on the mass member F side of the second elastic member B2 are positioned at the positions different from each other in the mass member circumferential direction, and the center of gravity FG of the mass member F is offset in the second input/output axial direction Q2D with respect to the input/output point J when seen in the mass member axial direction, so that while the weight of the mass member F is suppressed to be low, and in addition, while as described above, the damping force and further, the dynamic magnification of the entire elastic body section B are suppressed to be low, the resonance magnification (the rate of a spring constant K at the frequency at the time of the resonance with respect to the spring constant K near 0 Hz) can be sufficiently lowered. For more specific description, the center of gravity FG of the mass member F is offset in the second input/output axial direction Q2D with respect to the input/output point J when seen in the mass member axial direction, so that when the vibration is inputted to the anti-vibration device 1, a torque in order for the center of gravity FG of the mass member F to rotate on an elliptic trajectory FH (Fig. 8) described later is generated. In addition, the end portion B1F on the mass member F side of the first elastic member B1 and the end portion B2F on the mass member F side of the second elastic member B2 are positioned at the positions different from each other in the mass member circumferential direction, so that when the vibration is inputted to the anti-vibration device 1, the mass member F attempts to move substantially parallel to the line connecting the end portion B1F on the mass member F side of the first elastic member B1 and the end portion B2F on the mass member F side of the second elastic member B2, and thus, the vibration inputted to the anti-vibration device 1 can be divided into the vibration in the first input/output axial direction Q1D and the vibration in the second input/output axial direction Q2D, and further, the vibration can be effectively converted to the thermal energy by the elastic body section B (in particular, the second elastic member B2) to absorb the vibration.

In this way, the anti-vibration device 1 of the respective embodiments causes two translational motion energies having different vectors to interact with each other through the rotational motion. In addition, the anti-vibration device 1 of the respective embodiments configures the dynamic damper by one mess member F. In addition, the anti-vibration device 1 of the respective embodiments can achieve the lowered dynamic magnification at the same time while using the resonance suppression function by the elastic material having the high damping force.

As described above, the resonance magnification can be sufficiently lowered while the weight is reduced and the increase in the dynamic magnification is suppressed.

It should be noted that although the effect of the anti-vibration device 1 is as described above, the specific operation principle of the anti-vibration device 1 is not completely apparent, and is considered to be probably the following one. Hereinbelow, the operation principle of the anti-vibration device 1 will be considered with reference to Figs. 8 to 11(b).

It should be noted that although in Figs. 8 to 11(b), the anti-vibration device 1 of the embodiment of Figs. 6 and 7 is illustrated as an example, the following operation principle is ditto for the respective embodiments of Figs. 1 to 5. In the anti-vibration device 1 illustrated in Figs. 8 to 11(b), the first mounting member T1 is mounted in the vibration generation section, the second mounting member T2 is mounted in the vibration reception section, and the vibration in the first input/output axial direction Q1D is inputted, as the main vibration, to the first mounting member T1.

First, typically, when two conditions are satisfied such as:
(i) the mass vibrates in two orthogonal directions, and
(ii) by the change in the inertia of the mass (rotating body), the rotation speed is increased and decreased,
the motion energy is exchanged in the two orthogonal directions.

It should be noted that the law of conservation of angular momentum is expressed as follows. $\begin{matrix}{L}_{const} = Iω \\ I = {mr}^{2} \\ {L}_{const} = {mr}^{2} ω\end{matrix}$

In the above equation, I denotes the inertia (inertia moment).

Therefore, an energy E of the rotational motion body is expressed as follows. $\begin{matrix}E = \frac{1}{2} {Iω}^{2} \\ {ω}^{2} = {\left(\frac{{L}_{const}}{{mr}^{2}}\right)}^{2} \\ E = \frac{1}{2} {mr}^{2} {\left(\frac{{L}_{const}}{{mr}^{2}}\right)}^{2} = \frac{{{L}^{2}}_{const}}{{2 mr}^{2}}\end{matrix}$

Therefore, the E is inversely proportional to r². Due to that, the energy becomes larger toward the center axis (the potential gradient is larger toward the center).

These things are important in understanding the operation principle of the anti-vibration device 1.

Here, the overview of the operation principle of the anti-vibration device 1 will be described with reference to Fig. 8.

In the anti-vibration device 1, for example, when the coupling section T1c of the first mounting member T1 mounted in the vibration generation section receives the input of the vibration in the first input/output axial direction Q1D, the first elastic member B1 and the second elastic member B2 expand and shrink, so that the mass member F vibrates in the first input/output axial direction Q1D and the second input/output axial direction Q2D. In addition, by the shift between the center of gravity FG of the mass member F and the input/output point J (further, the coupling section T1c of the first mounting member T1), the mass member F rotationally vibrates such that the center of gravity FG of the mass member F rotates on the elliptic trajectory FH when seen in the mass member axial direction.

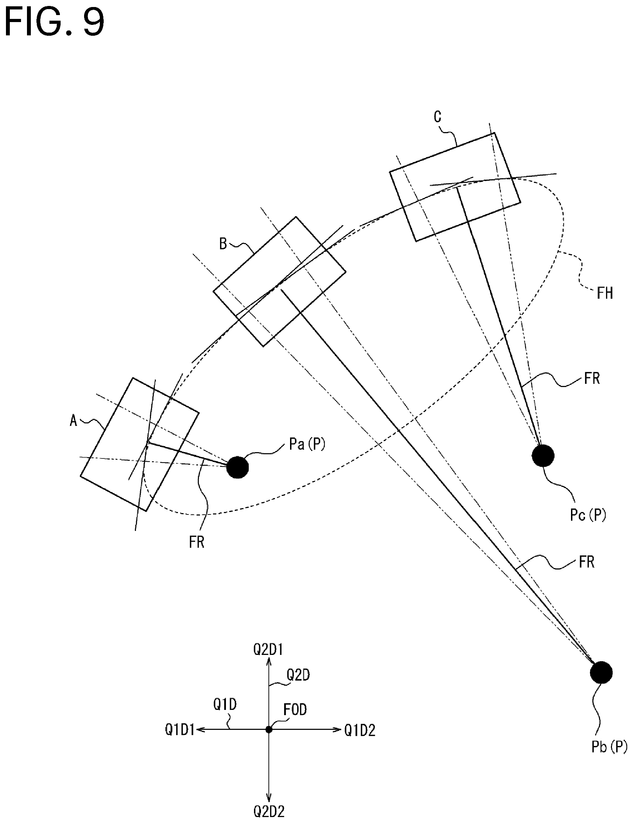

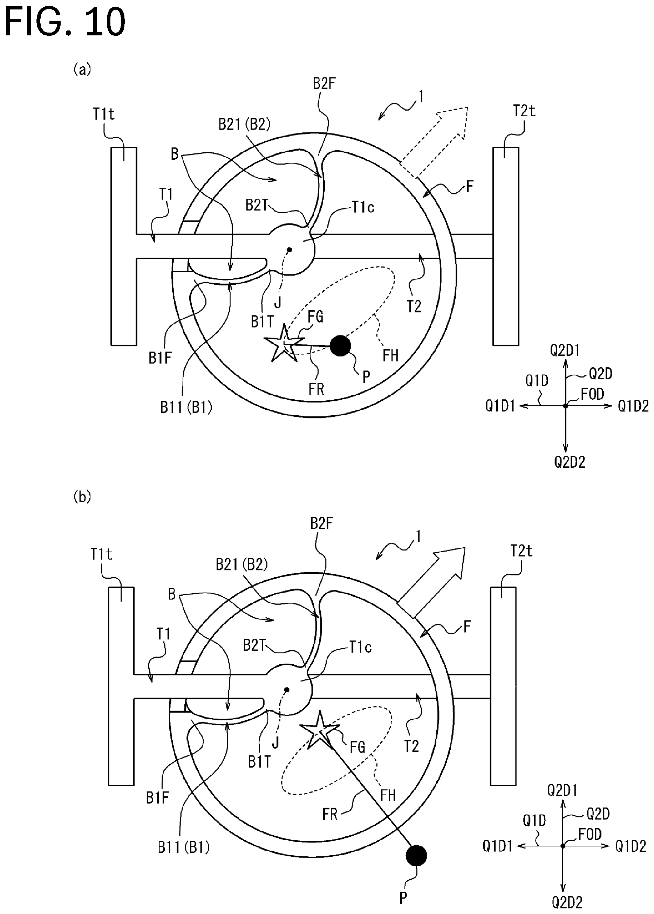

Next, further details of the operation principle of the anti-vibration device 1 will be described with reference to Figs. 9 to 11(b). It should be noted that Figs. 10(a) to 11(b) illustrate the difference in the position of the center of gravity FG of the mass member F and the like, but for simplicity, do not illustrate up to the deformation and the displacement of each portion of the anti-vibration device 1. In the following description, the "up", the "down", the "left", the "right", and the like mean the up, the down, the left, the right, and the like when each drawing is seen.

First, the elliptic trajectory FH (Fig. 8) in which the center of gravity FG of the mass member F performs the rotational motion will be supplementally described with reference to Fig. 9.

In the elliptic trajectory FH illustrated in Fig. 9, for example, the curve of the elliptic trajectory FH near A is assumed to be part of the circle, thereby estimating the position of the center thereof. Near the A, two tangent lines are drawn with respect to the elliptic trajectory FH, two perpendicular lines are drawn at the position where the perpendicular lines are contacted with the elliptic trajectory FH, and the position where the perpendicular lines intersect can be assumed as a rotation center Pa(P) of the center of gravity FG of the mass member F near the A.

Likewise, rotation centers Pb(P) and Pc(P) of the center of gravity FG of the mass member F near B and near C are drawn, thereby considering the extension directions of the rotation radii FR thereof.

Then,
near the A: The extension direction of the rotation radius FR is nearly horizontal.
near the B: The extension direction of the rotation radius FR is the diagonal direction at an angle of 45°.
near the C: The extension direction of the rotation radius FR is nearly vertical.

While considering this, the operation principle of the anti-vibration device 1 will be described below.

First, in Fig. 10(a), the center of gravity FG of the mass member F is at the leftmost end of the elliptic trajectory FH. At this time, the first elastic member B1 is in the state of expanding out, and the second elastic member B2 is in the state of shrinking.

The first elastic member B1 attempts to shrink, and the second elastic member B2 attempts to expand, so that the mass member F starts to move in the diagonally upward right direction.

Here, the extension direction of the rotation radius FR of the center of gravity FG of the mass member F connecting a rotation center P of the center of gravity FG of the mass member F and the center of gravity FG of the mass member F is nearly horizontal (the first input/output axial direction Q1D). Due to that, when the first elastic member B1 shrinks (the mass member F moves to the right in the horizontal direction), the potential gradient is a rising gradient, and the center of gravity FG of the mass member F acceleratedly rotates clockwise about the rotation center P, so that the motion in the up direction is caused in the mass member F. This transfers the energy from the first elastic member B1 to the second elastic member B2 in the direction in which the second elastic member B2 attempts to expand.

It should be noted that as the energy accumulated when the first elastic member B1 shrinks is lager, the transfer energy amount is larger.

Thereafter, in Fig. 10(b), the center of gravity FG of the mass member F is the closest to the input/output point J (further, the coupling section T1c of the first mounting member T1) on the elliptic trajectory FH. At this time, the expansions of the first elastic member B1 and the second elastic member B2 are both in the state of being close to the neutral point (for both of the expansion and the shrinkage, 0).

The orientation of the rotation radius FR of the center of gravity FG of the mass member F is in the diagonal direction at an angle of 45°, and the rotation center P is at the lower right, so that the motion energy in the right direction of the mass member F is converted to the motion energy in the up direction.

As the speed about the rotation center P of the mass member F is larger, this operation is exerted more efficiently.

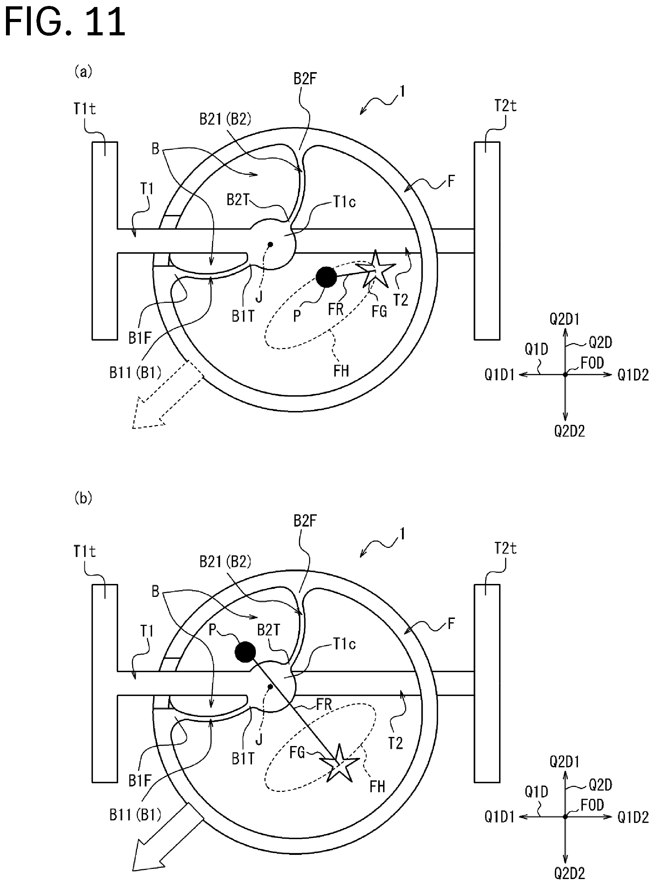

Thereafter, in Fig. 11(a), the center of gravity FG of the mass member F is at the rightmost end of the elliptic trajectory FH. At this time, the first elastic member B1 shrinks, and the second elastic member B2 is in the state of expending out.

Since the first elastic member B1 attempts to expand, and the second elastic member B2 attempts to shrink, the mass member F starts to move in the diagonally downward left direction.

Here, the extension direction of the rotation radius FR of the center of gravity FG of the mass member F connecting the rotation center P of the center of gravity FG of the mass member F and the center of gravity FG of the mass member F is nearly horizontal. Due to that, when the first elastic member B1 expands (the mass member F moves to the left in the horizontal direction), the potential gradient is a rising gradient, and the center of gravity FG of the mass member F acceleratedly rotates clockwise about the rotation center P, so that the motion in the down direction is caused in the mass member F. This transfers the energy from the first elastic member B1 to the second elastic member B2 in the direction in which the second elastic member B2 attempts to shrink.

It should be noted that as the energy accumulated when the first elastic member B1 expands is lager, the transfer energy amount is larger.

Thereafter, in Fig. 11(b), the center of gravity FG of the mass member F is the farthest from the input/output point J (further, the coupling section T1c of the first mounting member T1) on the elliptic trajectory FH. At this time, the expansions of the first elastic member B1 and the second elastic member B2 are both in the state of being close to the neutral point (for both of the expansion and the shrinkage, 0).

The orientation of the rotation radius FR of the center of gravity FG of the mass member F is in the diagonal direction at an angle of 45°, and the rotation center P is at the upper left, so that the motion energy in the left direction of the mass member F is converted to the motion energy in the down direction.

As the speed about the rotation center P of the mass member F is larger, this operation is exerted more efficiently.

The anti-vibration device 1 repeats the operation of Figs. 10(a) to 11(b) described above.

When the above is briefly summarized, in the anti-vibration device 1, when the vibration is inputted in the first input/output axial direction Q1D, the center of gravity FG of the mass member F rotates on the elliptic trajectory FH when seen in the mass member axial direction. Thereby, the vibration energy is transferred from the first elastic member B1 to the second elastic member B2, and the vibration energy is converted to the thermal energy in the second elastic member B2 having the high damping force, so that the vibration is effectively absorbed.

The above is the consideration of the operation principle of the anti-vibration device 1.

The anti-vibration device according to the present invention is not limited to the anti-vibration device 1 of the respective embodiments described above, and can also include various modification examples.

Hereinbelow, the preferable configurations, the modification examples, and the like of the anti-vibration device 1 will be described. Unless otherwise specified, various configurations described below are preferably applicable in the respective examples described in the present specification.

The first input/output axial direction Q1D is preferably the direction of the main vibration inputted to the anti-vibration device 1 when seen in the mass member axial direction.

In this case, the vibration inputted in the first input/output axial direction Q1D can be efficiently converted to the second input/output axial direction Q2D, and further, can be efficiently absorbed by the second elastic member B2. With this, the resonance suppression and the lowered dynamic magnification can be both coped with more reliably.

Like the respective examples of Figs. 1 and 6, the first input/output axial line Q1 and the second input/output axial line Q2 are preferably orthogonal when seen in the mass member axial direction.

With this, for example, when the anti-vibration device 1 is mounted in the vehicle such that the first input/output axial direction Q1D is the front-rear direction of the vehicle, and the second input/output axial direction Q2D is the up-down direction of the vehicle, the effect of the anti-vibration device for the vehicle can be exhibited more appropriately.

However, the first input/output axis Q1 and the second input/output axis Q2 may be orthogonal to each other at any angle other than 90° when seen in the mass member axial direction.

Like the respective examples of Figs. 1 to 7, the anti-vibration device 1 may include one mass member F, two first mounting members T1 disposed on both sides in the mass member axial direction, and the second mounting member T2 disposed between the two first mounting members T1 in the mass member axial direction and isolated from the two first mounting members T1.

With this, the vibration balance becomes good.

In this case, like the respective examples of Figs. 1 to 7, the coupling section T1c of the two first mounting members T1 disposed on both sides in the mass member axial direction and the coupling section T2c of the second mounting member T2 disposed between the coupling sections T1c of the two first mounting members T1 in the mass member axial direction are preferably disposed on the mass member inner circumference side of the mass member F.

Like the examples of Figs. 2 and 3, the first mounting member T1 (specifically, the coupling section T1c thereof) may be coupled to the mass member F via one of first elastic members B11(B1) and one of second elastic members B21(B2), and in addition, the second mounting member T2 (specifically, the coupling section T2c thereof) may be coupled to the mass member F via only one of first elastic members B12(B1).

More specifically, in the examples of Figs. 2 and 3, each of the two first mounting members T1 (specifically, the coupling sections T1c thereof) is coupled to the mass member F via one of the first elastic members B11(B1) and one of the second elastic members B21(B2), and the second mounting member T2 (specifically, the coupling section T2c thereof) is coupled to the mass member F via only one of the first elastic members B12(B1). The respective first mounting members T1 are coupled to the different first elastic members B11(B1).

In this case, the second mounting member T2 and the mass member F are not coupled via the second elastic member B2, so that accordingly, the transmission of the vibration in the second input/output axial direction Q2D is suppressed, and the vibration in the second input/output axial direction can thus be less likely to be transmitted to the vibration reception section.

It should be noted that in this case, preferably, the first mounting member T1 is mounted in the vibration generation section, and the second mounting member T2 is mounted in the vibration reception section. In this case, for example, when the vibration in the first input/output axial direction Q1D is inputted to the first mounting member T1 mounted in the vibration generation section, the vibration in the second input/output axial direction Q2D caused by the operation of the mass member F and the elastic body section B is less likely to be transmitted to the second mounting member T2 mounted in the vibration reception section.

Alternatively, like the respective examples of Figs. 4 to 7, the first mounting member T1 (specifically, the coupling section T1c thereof) may be coupled to the mass member F via one of the first elastic members B11(B1) and one of the second elastic members B21(B2), and in addition, the second mounting member T2 (specifically, the coupling section T2c thereof) may be coupled to the mass member F via one of the first elastic members B12(B1) and one of second elastic members B22(B2).

More specifically, in the respective examples of Figs. 4 to 7, each of the two first mounting members T1 (specifically, the coupling sections T1c thereof) is coupled to the mass member F via one of the first elastic members B11(B1) and one of the second elastic members B21(B2), and in addition, the second mounting member T2 (specifically, the coupling section T2c thereof) is coupled to the mass member F via one of the first elastic members B12(B1) and one of the second elastic members B22(B2). The respective first mounting members T1 are coupled to the different first elastic members B11(B1) and the different second elastic members B21(B2).

With this, like the examples of Figs. 2 and 3 described above, as compared with the case where the second mounting member T2 and the mass member F are not coupled via the second elastic member B2, the second mounting member T2 and the mass member F are coupled via the second elastic member B2, so that accordingly, the resonance suppression effect can be larger.

In this case, there is almost no difference in the effect obtained between the case where the first mounting member T1 is mounted in the vibration generation section and the second mounting member T2 is mounted in the vibration reception section and the case where the first mounting member T1 is mounted in the vibration reception section and the second mounting member T2 is mounted in the vibration generation section.

Like the respective examples of Figs. 1 to 7, the elastic body section B preferably includes the first elastic member B11(B1) coupling the first mounting member T1 (specifically, the coupling section T1c thereof) and the mass member F, and the first elastic member B12(B1) coupling the second mounting member T2 (specifically, the coupling section T2c thereof) and the mass member F.

In this case, like the respective examples of Figs. 1 to 7, the respective mounting members T1 and T2 are preferably respectively coupled to the different first elastic members B1.

Like the respective examples of Figs. 1 to 7, the elastic body section B preferably includes the second elastic member B21(B2) coupling the first mounting member T1 (specifically, the coupling section T1c thereof) and the mass member F.

In this case, like the respective examples of Figs. 1 to 7, when the plurality of mounting sections T1 are provided, the respective first mounting members T1 are preferably respectively coupled to the different second elastic members B21(B2).

Like the respective examples of Figs. 4 to 7, the elastic body section B may include the second elastic member B22(B2) coupling the second mounting member T2 (specifically, the coupling section T2c thereof) and the mass member F. With this, the resonance suppression effect can be made larger.

Like the respective examples of Figs. 4 to 7, when the first mounting member T1 and the second mounting member T2 are respectively coupled to the second elastic members B2, the respective mounting members T1 and T2 are preferably respectively coupled to the different second elastic members B2.

Like the respective examples of Figs. 1 to 7, when the first mounting member T1 (specifically, the coupling section T1c thereof) is coupled to the mass member F via one of the first elastic members B11(B1) and one of the second elastic members B21(B2), the end portion B1T on the first mounting member T1 side of the first elastic member B11(B1) coupled to the first mounting member T1 and the end portion B2T on the first mounting member T1 side of the second elastic member B21(B2) coupled to the first mounting member T1 are preferably positioned at substantially the same position in the mass member axial direction FOD.

With this, the resonance suppression and the lowered dynamic magnification can be both coped with more effectively.

Like the respective examples of Figs. 4 to 7, when the second mounting member T2 (specifically, the coupling section T2c thereof) is coupled to the mass member F via one of the first elastic members B12(B1) and one of the second elastic members B22(B2), the end portion B1T on the second mounting member T2 side of the first elastic member B12(B1) coupled to the second mounting member T2 and the end portion B2T on the second mounting member T2 side of the second elastic member B22(B2) coupled to the second mounting member T2 are preferably positioned at substantially the same position in the mass member axial direction FOD.

With this, the resonance suppression and the lowered dynamic magnification can be both coped with more effectively.

Like the respective examples of Figs. 1 to 7, when the mass member F forms the annular shape, the mounting sections T1t and T2t of the respective mounting members T1 and T2 may be outside the mass member F. In this case, like the respective examples of Figs. 1 to 7, the respective mounting members T1 and T2 may respectively extend in any direction between the coupling sections T1c and T2c and the mounting sections T1t and T2t, and for example, may extend in the direction perpendicular to the mass member axis and pass through a through hole Fh provided in the mass member F, or may extend in the mass member axial direction FOD and pass through the opening end surface on one of the sides in the mass member axial direction FOD of the mass member F.

The first mounting member T1 of the respective examples of Figs. 1 to 5 extends in the mass member axial direction FOD between the coupling section T1c and the mounting section T1t, and passes through the opening end surface on one of the sides in the mass member axial direction FOD of the mass member F. The mounting section T1t is positioned on the mass member axial direction FOD outer side with respect to the coupling section T1c.

The first mounting member T1 of the example of Figs. 6 and 7 extends in the direction perpendicular to the mass member axis (more specifically, the first input/output axial direction Q1D) between the coupling section T1c and the mounting section T1t, and passes through the through hole Fh provided in the mass member F. The mounting section T1t is positioned on the first input/output axial direction first side Q1D1 with respect to the coupling section T1c.

The second mounting member T2 of the respective examples of Figs. 1 to 7 extends in the direction perpendicular to the mass member axis (more specifically, the first input/output axial direction Q1D) between the coupling section T2c and the mounting section T2t, and passes through the through hole Fh provided in the mass member F. The mounting section T2t is positioned on the first input/output axial direction second side Q1D2 with respect to the coupling section T2c. Embodiment

The anti-vibration devices according to an embodiment and a comparative example are respectively evaluated by analysis, which will be described below.

In the analysis, the analyzing models of the anti-vibration devices according to the embodiment and the comparative example are made.

Although not illustrated, the model of the anti-vibration device according to the comparative example has the configuration of the torque rod in which the dynamic damper including the elastic member and the mass member is provided in the rod main body coupling the large bushing and the small bushing. In the torque rod, the tanδ of the elastic member of the large bushing is 0.05, the tanδ of the elastic member of the small bushing is 0.2, the tanδ of the elastic member of the dynamic damper is 1.0, and the ratio M1:M2 of the mass M1 of the rod main body having the function as the mass member and the mass M2 of the mass member of the dynamic damper is 100:100. The tanδ of the elastic member of the typical dynamic damper is approximately 0.2 or less, the tanδ of the elastic member of the dynamic damper used in the comparative example is much higher than the typical one, and the elastic member having the tanδ to such a high extent is scarcely used in the actual product. In addition, in the typical torque rod with the dynamic damper, the rate of the mass M2 of the mass member of the dynamic damper with respect to the mass M1 of the rod main body is approximately 10%, but in the comparative example, this rate is significantly increased. Increasing the mass to this extent in the actual product is impractical in the vehicle field in which the reduction in weight is particularly required. In the comparative example, by setting the tanδ and the mass in this way, the torque rod with the dynamic damper is set so as to be able to achieve the resonance suppression and the lowered dynamic magnification as much as possible.

The model of the anti-vibration device according to the embodiment has the configuration of the example of Figs. 6 and 7. In the anti-vibration device 1 of the embodiment, the material (physical property) of the entire thereof is the same, and the thickness of each portion is regulated to achieve the rigidity or the elasticity of each portion. In the anti-vibration device 1, the tanδ of each of the first elastic members B1 is 0.05, the tanδ of the second elastic member B2 is 1.0, and the mass of the mass member F is the same as the mass M1 of the rod main body of the comparative example. That is, the anti-vibration device 1 of the embodiment includes only one mass member F, so that the total mass of the mass member is half the comparative example (the sum of the mass M1 of the rod main body and the mass M2 of the mass member of the dynamic damper), and the weight is significantly reduced. In addition, also in the embodiment, the tanδ of each of the first elastic members B1 is made to be 0.05, so that the anti-vibration device 1 is set so as to be able to achieve the lowered dynamic magnification to the almost same extent as the comparative example.

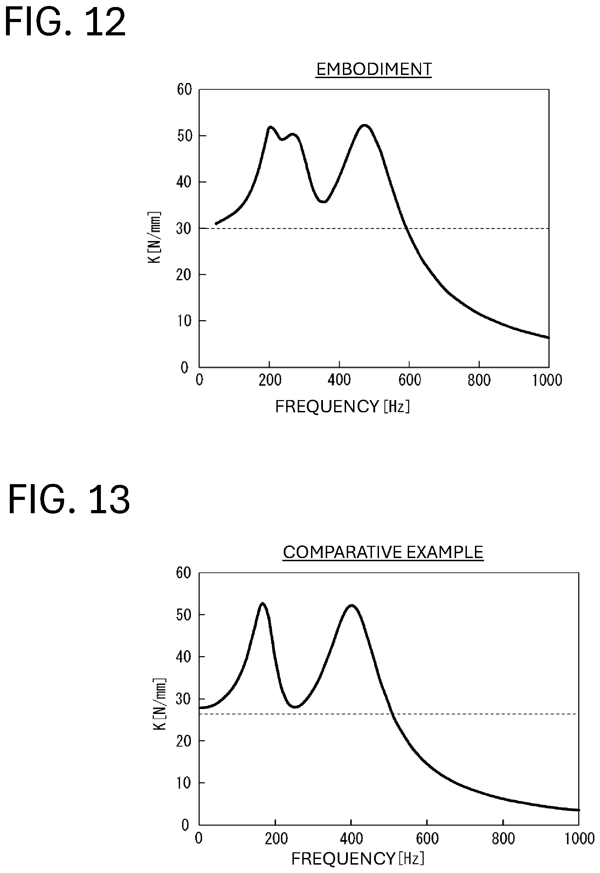

By using the respective models of the embodiment and the comparative example, the vibration characteristics are evaluated by the analysis. In the anti-vibration device 1 of the embodiment, the vibration in the first input/output axial direction Q1D is inputted to the first mounting member T1. The results thereof are respectively illustrated in Figs. 12 and 13. Fig. 12 illustrates the analysis result of the embodiment, and Fig. 13 is the analysis result of the comparative example. In Figs. 12 and 13, the horizontal axis indicates the frequency (Hz), and the vertical axis indicates the spring constant K (N/mm).

As seen from Figs. 12 and 13, in any of the examples, substantially the same resonance magnification (the rate of the spring constant K at the frequency at the time of the resonance with respect to the spring constant K near 0 Hz) is obtained, and in addition, the resonance magnification is less than 2.0, and is sufficiently lowered.

Therefore, in the embodiment, while the lowered dynamic magnification and the resonance suppression effect are obtained to the almost same extent as the comparative example, the significant reduction in weight is enabled as compared with the comparative example.

### Industrial Applicability

An anti-vibration device of the present invention can be used as various anti-vibration devices, but is preferably used as an anti-vibration device for a vehicle, and in particular, is particularly preferably used as, for example, a torque rod and the motor mount and the like for an electric vehicle, in which the vibration input direction is basically determined as one direction.

### Reference Signs List

1: anti-vibration device
T1: first mounting member (mounting member)
T1c: coupling section
T1t: mounting section
T2: second mounting member (mounting member)
T2c: coupling section
T2t: mounting section
B: elastic body section
B1, B11, B12: first elastic member
B1F: end portion on mass member side
B1T: end portion on mounting member side
B2, B21, B22: second elastic member
B2F: end portion on mass member side
B2T: end portion on mounting member side
F: mass member
Fh: through hole
FO: mass member axis
FOD: mass member axial direction
FG: center of gravity of mass member
FH: elliptic trajectory
P, Pa, Pb, Pc: rotation center of center of gravity of mass member
FR: rotation radius of center of gravity of mass member
Q1: first input/output axis
Q1D: first input/output axial direction
Q1D1: first input/output axial direction first side
Q1D2: first input/output axial direction second side
Q2: second input/output axis
Q2D: second input/output axial direction
Q2D1: second input/output axial direction first side
Q2D2: second input/output axial direction second side
J: input/output point

## Claims

1. An anti-vibration device comprising:
a first mounting member configured to be mounted in one of sides of a vibration generation section and a vibration reception section;
a second mounting member configured to be mounted in the other side of the vibration generation section and the vibration reception section and isolated from the first mounting member;
an elastic body section; and
a mass member coupled to the first mounting member and the second mounting member via the elastic body section and forming a shape of all or part of an annular shape,
wherein the elastic body section includes:
one or a plurality of first elastic members coupled at one end portion to the mass member and extending on or near a predetermined first input/output axis, when seen in a mass member axial direction; and
one or a plurality of second elastic members coupled at one end portion to the mass member and extending on or near a predetermined second input/output axis, when seen in the mass member axial direction,
wherein an end portion on the mass member side of the first elastic member and an end portion on the mass member side of the second elastic member are positioned at a positions different from each other in a mass member circumferential direction,
wherein a center of gravity of the mass member is offset in a second input/output axial direction parallel to the second input/output axis with respect to an input/output point that is an intersection of the first input/output axis and the second input/output axis, when seen in the mass member axial direction, and
wherein the second elastic member is configured of an elastic material having a higher damping force than the first elastic member.

2. The anti-vibration device according to claim 1,
wherein a first input/output axial direction parallel to the first input/output axis, when seen in the mass member axial direction is the direction of a main vibration inputted to the anti-vibration device.

3. The anti-vibration device according to claim 1, including:
one mass member;
the two first mounting members disposed on both sides in the mass member axial direction; and
the second mounting member disposed between the two first mounting members in the mass member axial direction and isolated from the two first mounting members.

4. The anti-vibration device according to claim 3,
wherein each of the two first mounting members is coupled to the mass member via one of the first elastic members and one of the second elastic members, and
wherein the second mounting member is coupled to the mass member via only one of the first elastic members.

5. The anti-vibration device according to claim 3,
wherein each of the two first mounting members and the second mounting member is coupled to the mass member via one of the first elastic members and one of the second elastic members.

6. The anti-vibration device according to claim 1,
wherein the first input/output axis and the second input/output axis are orthogonal, when seen in the mass member axial direction.

7. The anti-vibration device according to claim 1,
wherein the first mounting member is coupled to the mass member via one of the first elastic members and one of the second elastic members, and
wherein the second mounting member is coupled to the mass member via only one of the first elastic members.

8. The anti-vibration device according to claim 1,
wherein each of the first mounting member and the second mounting member is coupled to the mass member via one of the first elastic members and one of the second elastic members.

9. The anti-vibration device according to claim 7,
wherein an end portion on the first mounting member side of the first elastic member coupled to the first mounting member and an end portion on the first mounting member side of the second elastic member coupled to the first mounting member are positioned at substantially the same position in the mass member axial direction.

10. The anti-vibration device according to claim 8,
wherein the end portion on the second mounting member side of the first elastic member coupled to the second mounting member and the end portion on the second mounting member side of the second elastic member coupled to the second mounting member are positioned at substantially the same position in the mass member axial direction.

11. The anti-vibration device according to claim 1,
wherein when a vibration is inputted to the anti-vibration device in the first input/output axial direction parallel to the first input/output axis when seen in the mass member axial direction, the center of gravity of the mass member rotates on an elliptic trajectory, when seen in the mass member axial direction.
